# EUROPEAN PATENT SPECIFICATION

(11) **EP 0 855 810 B1**
(45) Date of publication and mention of the grant of the patent: **18.03.2009**
(21) Application number: 98300143.9
(22) Date of filing: 09.01.1998
(51) Int. Cl.: H04B 10/145, G02B 6/28

(54) **Burst mode wavelength manager**
Burst-Modewellenlängenführer
Gestionnaire de longueurs d'onde en rafale

(30) Priority: 24.01.1997 GB 9701488
(43) Date of publication of application: 29.07.1998
(73) Proprietor: Ericsson AB, Stockholm (SE)
(72) Inventor: Wood, Nigel Robert, Brackley, Northants, NN13 5SB (GB)
(74) Representative: Stasiewski, Piotr Grzegorz

(56) References cited:
- EP-A- 0 237 184
- YAMADA Y ET AL: "Demonstration of 30 circulations in a transparent optical-loop buffer for 2-channel FDM packets at a data rate of 2.8 Gbit/s" OFC 96. OPTICAL FIBER COMMUNICATION. VOL.2. 1996 TECHNICAL DIGEST SERIES. CONFERENCE EDITION (IEEE CAT. NO.96CH35901), OFC 96 - CONFERENCE ON OPTICAL FIBER COMMUNICATION, SAN JOSE, CA, USA, 25 FEB.-1 MARCH 1996, - 25 February 1996 (1996-02-25) pages 107-108, XP002136055 1996, Washington, DC, USA, Opt. Soc. America, USA
- CALZAVARA ET AL: "Optical fiber loop memory for multiwavelength packet buffering in ATM switching applications" OFC 93. OPTICAL FIBER COMMUNICATION 1993 TECHNICAL DIGEST SERIES, VOL. 4., - 21 February 1993 (1993-02-21) pages 19-20, XP002136056 NEW YORK, US
- BENDELLI G ET AL: "PHOTONIC ATM SWITCH BASED ON A MULTIWAVELENGTH FIBER-LOOP BUFFER" OPTICAL FIBER COMMUNICATION,US,NEW YORK, IEEE,1995 - 26 February 1995 (1995-02-26), pages 141-142, XP000517676 ISBN: 0-7803-2654-7
- KEATING A J ET AL: "WAVELENGTH STABILIZATION IN PACKET-SWITCHED WDM NETWORKS" JOURNAL OF LIGHTWAVE TECHNOLOGY,US,IEEE. NEW YORK, vol. 15, no. 1, 1 January 1997 (1997-01-01), pages 76-85, XP000642279 ISSN: 0733-8724

## Description

The present invention relates to a means of controlling the wavelength of optical Wave Division Multiplex (WDM), High Density Wave Division Multiplex (HDWDM) or coherent-based transmitters in localised or distributed networks operating in burst mode (BM). Due to the Burst Mode Transmitters (BMTx) only transmitting data (and hence a detectable optical signal) for a very short time interval, standard wavelength control systems would have insufficient time to measure the BMTx wavelengths. The aim of the measurement system of the present invention is to store the optical BM data stream transmitted by each BMTx and present this to a scanning based wavelength measurement system to measure the BMTx wavelength and hence determine the required wavelength correction. This would be applicable in Multi-wavelength Passive Optical Networks (PONs) for management of upstream traffic BMTx units.

There are known documents related to use of recirculating loops for storing samples of data traffic signals, namely publications by:
YAMADA Y at al: "Demonstration of 30 circulations in a transparent optical-loop buffer for 2-channel FDM packets at a data rate of 2.8 Gbit/s" OFC 96. OPTICAL FIBER COMMUNICATION. VOL.2. 1996 TECHNICAL DIGEST SERIES. CONFERENCE EDITION (IEEE CAT. NO.96CH35901), OFC 96 - CONFERENCE ON OPTICAL FIBER COMMUNICATION, SAN JOSE, CA, USA, 25 FEB.-1 MARCH 1996, pages 107-108, Up002136055 1996, Washington, DC, USA, Opt. Soc. America, USA or by
CALZAVARA et al: "Optical fiber loop memory for multiwavelength packet buffering in ATM switching applications" OFC 93. OPTICAL FIBER COMMUNICATION 1993 TECHNICAL DIGEST SERIES, VOL. 4., - 21 February 1993, pages 19-20, XP002136056 NEW YORK, US, or
BENDELLI G et al: "PHOTONIC ATM SWITCH BASED ON A MULTIWAVELENGTH FIBER-LOOP BUFFER" OPTICAL FIBER COMMUNICATION,US,NEW YORK, IEEE,1995 - 26 February 1995 (1995-02-26), pages 141-142, XP000517676 ISBN: 0-7803-2654-7.

However device and its operation as in the invention now to be described are neither disclosed nor suggested in the prior art documents.

According to a first aspect of the present invention there is provided an optical network operating with burst mode data traffic signals comprising a recirculating optical loop memory including means to take a sample of a burst mode data traffic signal and to store the sample within the recirculating optical loop memory and further comprising a scanning based wavelength measurement system adapted to determine the wavelength of the sample and means to calculate a frequency correction using the determined wavelength of the sample.

According to a second aspect of the present invention there is provided awavelength manager for use in an optical network operating with burst mode data traffic signals, the wavelength manager comprising a recirculating optical loop memory including means to take a sample of a burst mode data traffic signal and to store the sample within the recirculating optical loop memory, and further comprising a scanning based wavelength measurement system adapted to determine the wavelength of the sample and means to calculate a frequency correction using the determined wavelength of the sample.

The present invention will now be described by way of example, with reference to the accompanying drawings, in which:
Figure 1 shows a schematic drawing of a Burst Mode Wavelength Management System using "signal present gating" ;
Figure 2 shows a further schematic drawing of a Burst Mode Wavelength Management System using "self gating"; and

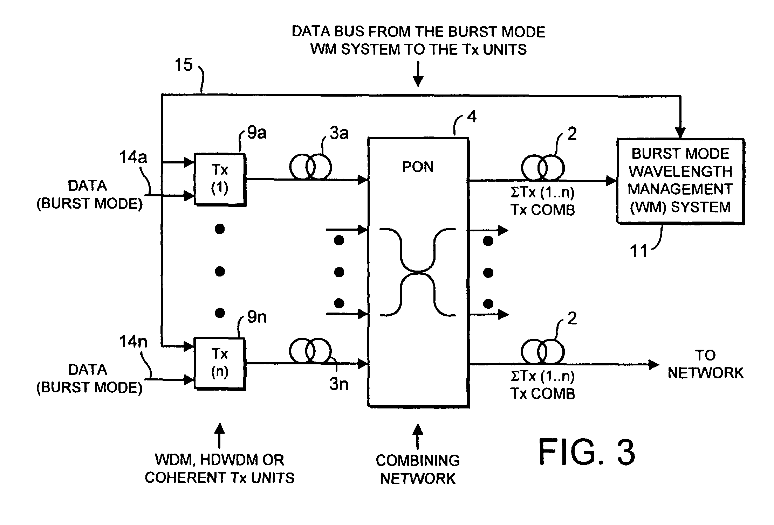

Figure 3 shows a schematic diagram of an Optical System using the Burst Mode Wavelength Management System of Figure 1 ou Figure 2.

Considering the figures, a Burst Mode Wavelength Manager (BMWM) system 11 is illustrated using a Scanning Heterodyne or Scanning Filter based spectrometer (Scanning-based Wavelength Measuring System) 1, which monitors a BMTx comb 2. The comb 2 is produced by combining the BMTx signals 3.1-3.n from the transmitter units 9.1-9.n in a Passive Optical Network (PON) 4.

A 2x2 optical switch 5 is used to sample the incoming BMTx comb 2 allowing a short optical pulse to enter a recirculating optical loop memory 6.

A coupler 7 allows a portion of the comb travelling round the loop memory 6 to be tapped off and delivered to the Scanning-based Wavelength Measuring System 1. The optical switch 5 is then used to empty the loop memory 6 before the system is reset ready for another sample.

The length of the loop memory 6, typically single mode fibre based, is set by providing an optical delay storage line 8 of such a length that the gating period width only fills about 90% of the loop memory 6. For example. for a 100ns gating period width the storage line 8, which would form the major part of the loop memory would be approximately 30Km long. An optical amplifier 9 is included in the loop memory 6 to compensate for the round trip optical losses (couplers. fibre loss. splices. connectors. etc.). The optical amplifier 9 ideally should be wavelength flattened across the wavelength band of interest for both wavelength and power.

The frequency correction is calculated at a control unit 12 (required wavelength minus the measured wavelength from Scanning based Wavelength Measurement System 1), and the result is transmitted by a data bus 15 to the appropnate BMTx unit 9.1-9.n using a dedicated electrical connection (i.e. wire, twisted pair, RS232, RS422 or other point to point interface) electrical interface bus, (i.e. RS485, IEEE488, SCS1 or other multi-device bus-based interface) or via an optical overlay. The BMTx unit 9.1-9.n interprets this required correction, and alters the operating conditions of the unit's laser (i.e. increase/decrease laser bias currents or laser operating temperature).

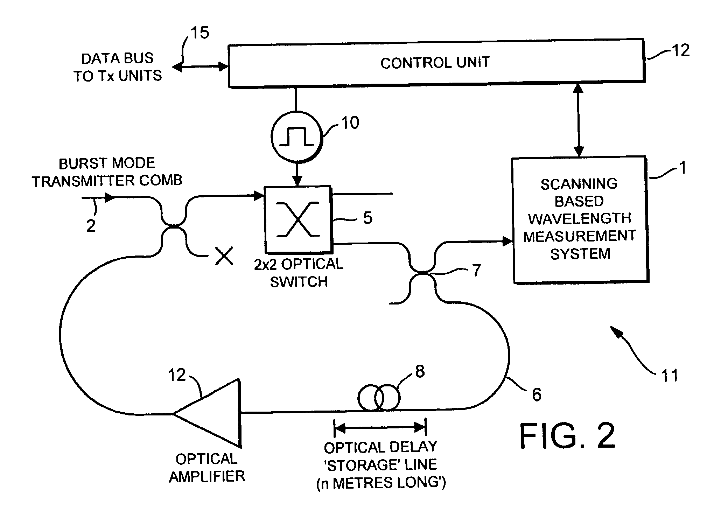

Two different control schemes can be used. In the self-gating mode in Figure 2 the output from the Scanning based Wavelength Measurement System 1 passes to the control unit 12 which provides a periodic gating pulse 10 to the optical switch 5. In this mode the BMWM 11 can only sample at set time intervals and consequently has to sample at a sufficient rate to ensure that all channels are detected.

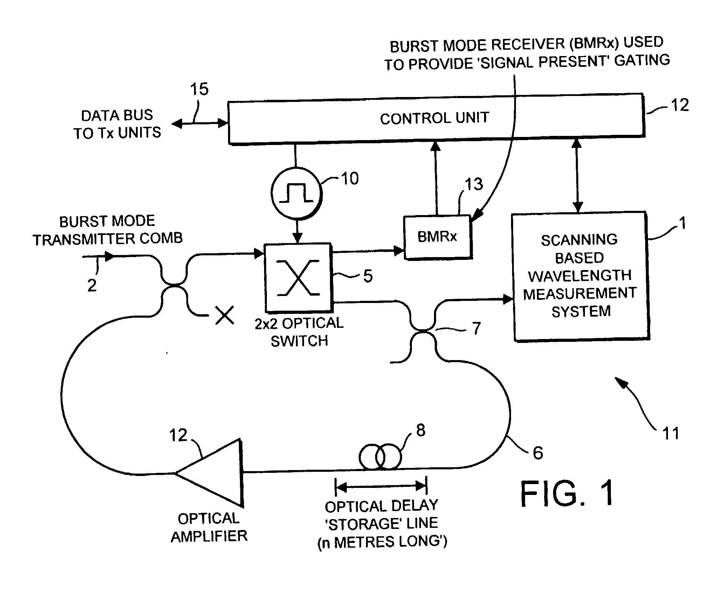

In the signal present gating mode in Figure 1, a Burst Mode Receiver (BMRx) 13 is attached to the second output of the optical switch 5. The BMRx 13 allows the TDMA signal to be detected and hence allows identification of the TDMA signal's source. Thus, knowing the origin of the source it is possible to concentrate the sampling on an individual transmitter or group of transmitters. This allows much faster diagnostic times and enables servicing of every TDMA transmitter.

## Claims

1. A wavelength manager (11) for an optical network operating with burst mode data traffic signals, the wavelength manager (11) comprising a recirculating optical loop memory (6) including means to take a sample (5) of a burst mode data traffic signal and to store the sample within the recirculating optical loop memory (6), and further comprising a scanning based wavelength measurement system (1) adapted to determine the wavelength of the sample and means to calculate (12) a frequency correction using the determined wavelength of the sample.

2. A wavelength manager (11) as claimed in Claim 1, further comprising a plurality of transmitted units (9a - 9n) and an optical combing means to generate an optical comb (2).

3. A wavelength manager (11) as claimed in claim 1 or claim 2 further comprising means to generate a sample control signal including a periodic gating pulse.

4. A wavelength manager (11) as claimed in any one of Claim 1 or claim 2, comprising means to generate a sample control signal including a local signal present burst mode receiver (BMRx).

5. An optical network operating with burst mode data traffic signals comprising a wavelength manager according to any of claim 1 to 4.

## Patentansprüche

1. Wellenlängenmanager (11) für ein optisches Netz, das mit Burst-Mode-Datenverkehrssignalen betrieben wird, wobei der Wellenlängenmanager (11) einen zirkulierenden optischen Schleifenspeicher (6) umfasst, der Mittel aufweist, um einen Abtastwert (5) eines Burst-Mode-Datenverkehrssignals zu entnehmen und um den Abtastwert innerhalb des zirkulierenden optischen Schleifenspeichers (6) zu speichern, und ferner ein auf Abtastung basierendes Wellenlängenmesssystem (1) umfasst, das dafür eingerichtet ist, die Wellenlänge des Abtastwertes zu bestimmen, und Mittel zum Berechnen (12) einer Frequenzkorrektur unter Verwendung der bestimmten Wellenlänge des Abtastwertes.

2. Wellenlängenmanager (11) nach Anspruch 1, welcher ferner mehrere Sendereinheiten (9a - 9n) und ein optisches Kombiniermittel zum Erzeugen eines optischen Kammes (2) umfasst.

3. Wellenlängenmanager (11) nach Anspruch 1 oder Anspruch 2, welcher ferner Mittel zum Erzeugen eines Abtastwert-Steuersignals umfasst, die einen periodischen Gating-Puls aufweisen.

4. Wellenlängenmanager (11) nach Anspruch 1 oder Anspruch 2, welcher Mittel zum Erzeugen eines Abtastwert-Steuersignals umfasst, die einen lokalen Signal-Present-Burst-Mode-Empfänger (BMRx) aufweisen.

5. Optisches Netz, das mit Burst-Mode-Datenverkehrssignalen betrieben wird, welches einen Wellenlängenmanager nach einem der Ansprüche 1 bis 4 umfasst.

## Revendications

1. Gestionnaire de longueurs d'ondes (11) pour un réseau optique fonctionnant avec des signaux de trafic de données en rafales, le gestionnaire de longueurs d'ondes (11) comprenant une mémoire en boucle optique par recirculation (6) incluant des moyens pour prendre un échantillon (5) d'un signal de trafic de données en rafales et pour mémoriser l'échantillon à l'intérieur de la mémoire en boucle optique par recirculation (6), et comprenant en outre un système de mesure de longueur d'onde (1) basé sur balayage adapté afin de déterminer la longueur d'onde de l'échantillon et des moyens pour calculer (12) une correction de fréquence en utilisant la longueur d'onde déterminée de l'échantillon.

2. Gestionnaire de longueurs d'ondes (11) selon la revendication 1, comprenant en outre une pluralité d'unités d'émetteurs (9a-9n) et un moyen de peignage optique pour générer un peigne optique (2).

3. Gestionnaire de longueurs d'ondes (11) selon la revendication 1 ou 2, comprenant en outre des moyens pour générer un signal de commande d'échantillon incluant une impulsion de déclenchement périodique.

4. Gestionnaire de longueurs d'ondes (11) selon une quelconque des revendications 1 ou 2, comprenant des moyens pour générer un signal de commande d'échantillon incluant un récepteur en rafales de signal local actuel (BMRx).

5. Réseau optique fonctionnant avec des signaux de trafic de données en rafales comprenant un gestionnaire de longueurs d'ondes selon une quelconque des revendications 1 à 4.
